# EUROPEAN PATENT APPLICATION

(11) **EP 1 792 882 A1**
(43) Date of publication of application: **06.06.2007**
(21) Application number: 05111658.0
(22) Date of filing: 02.12.2005
(51) Int. Cl.: C04B 38/02, C04B 14/10

(54) **Process for the manufacture of lightweight construction materials containing clay.**

(71) Applicant: SOLVAY (Société Anonyme), 1050 Bruxelles (BE)
(72) Inventor: Signorini, Stefano, 57013 Rosignano Solvay (LI) (IT); Nenciati, Francesco, 57018 Vada (LI) (IT); Fagiolini, Nilo, 57013 Rosignano Solvay (LI) (IT); Massa, Giorgio, 57013 Rosignano Solvay (LI) (IT)
(74) Representative: Vande Gucht, Anne

(57) **Abstract**

Process for the manufacture of lightweight construction materials starting from clay by extrusion molding wherein a source of hydrogen peroxide is used as gas generating agent. The use of hydrogen peroxide in such a process allows to reduce the power of extrusion at constant moisture content, and to reduce the amount of added water at constant extrusion pressure.

## Description

The present invention is related to a process for the manufacture of enlightened construction materials starting from clay, especially to a process for the manufacture of bricks.

The possibility of producing porous (or enlightened or light weight) construction materials by addition of a foaming agent (or gas generating agent) is well known. The gas generated forms bubbles which remain in the mass of the construction material during curing and provide for the porosity of the material.

The market for enlightened materials is currently growing. This is partly due to the fact that the density of the material is roughly proportional to heat conductivity. Since the pressure in energy savings by reducing thermal dispersion is increasing, construction materials need to become more and more porous. Furthermore, low material density is important in seismic constructions.

However, the current technologies for material expansion have constraints. Indeed, when combustible materials such as polystyrene and sawdust are incorporated into clay, as described in the publication "Development of extruded, high-thermal insulating bricks", ZI International, 12, p. 36-41, 2001, it generates pyrolysis gas effluents and unwanted clay coloration. When aluminum powder and caustic soda are used in concrete, as described in the Australian patent application 2149097, special safety equipment is required because of hydrogen generation.

The present invention aims to overcome these drawbacks by providing a new process for the manufacture of enlightened construction materials starting from clay which allows to save energy and material lightening without environmental impact or quality impact. The aim of the invention is especially to provide material expansion while requiring less energy or power for clay extrusion at constant water content, and while requiring less added water at constant extrusion pressure.

To this end, the present invention is related to a process for the manufacture of enlightened construction materials starting from clay by extrusion molding wherein a source of hydrogen peroxide is used as gas generating agent.

One of the essential characteristics of the invention resides in the use of a hydrogen peroxide source as gas generating agent. This has unexpectedly resulted in a process which allows material expansion (typically from a density of about 1.9 kg/dm³ to a density of about 1.5 kg/dm³ and ultimately down to a density of about 0.8 kg/dm³) without environmental impact since the gas formed is oxygen, and with a possibility to reduce the required extrusion power (from about 10 to 20 %) at constant water content and the amount of water added at constant extrusion pressure.

The expression "enlightened construction material" denotes a material with a high porous volume, which is generally at least 20 %, especially at least 15 % and in the most advantageous cases at least 55 %. The porous volume is measured according to the following method EN ISO 8990 which consists in :
- Measuring the weight of a dry material, such as a brick, (obtained by heating during 24 h at 100 °C and cooling afterwards)
- Filling all the porous volume with water (by immersing during 24 h in water)
- Measuring the weight of the wet material, such as a brick.

The construction materials made by the process of the invention can be chosen from bricks, wall tile, ceiling tile, core materials for insulated panels, curtain wall panels, panelized bricks, partition walls and exterior facings. The preferred materials are bricks.

The clay used as one of the starting materials in the process of the invention can be chosen from minerals with alumina (Al₂O₃) and silica (SiO₂) in their composition along with various other trace components. Examples of suitable clays are kaolin, ball clay, shale and montmorillonite.

The construction materials made by the process of the invention can also contain other additives such as sand, barium carbonate and surfactants.

The source of hydrogen peroxide used in the process of the invention can be chosen from hydrogen peroxide itself, sodium percarbonate, sodium perborate, calcium peroxide, magnesium peroxide, zinc peroxide, mixed calcium / magnesium peroxide and their mixtures. Hydrogen peroxide is preferred. In most cases, the hydrogen peroxide is used in the form of an aqueous solution. Such solution generally contains from 20 to 70 % wt/wt of hydrogen peroxide, preferably from 40 to 50 % wt/wt. The hydrogen peroxide source, when introduced into the process, results in the formation of hydrogen peroxide which itself decomposes and generates gas that forms bubbles and creates porosity into the material.

The process of the invention involves extrusion molding. This is done in an extruder which is fed with a pasty material containing the clay. The pasty material can be prepared in a mixer by mixing clay with water and optionally other additives. Examples of additives are sand, barium carbonate and surfactants. Examples of suitable mixers are of the kneader type or mixing screw type. The pasty material is then sent to the extruder that typically includes a vacuum-de-airing chamber. The pasty material is forced through a die to form the desired shapes. The die may contain internal elements to produce a cored (partially hollow) shape. Die lubricants may be employed. Examples of lubricants are heavy hydrocarbons and exhausted lubricating oils. The shapes are then usually cut into slugs of a convenient length and then further cut into bricks for example using reel or push through cutters. The product is then loaded, for instance by using robots, on kiln cars for drying and firing.

During the process of the invention, water is generally added twice :
1. before mixing, in an amount of from 1 to 25 % by weight based on the weight of the dry clay, especially from 15 to 18 % by weight
2. during mixing in order to control finely the extrusion pressure, in an amount of from 2 to 10 % by weight, preferably from 3 to 5 % by weight.

During the process of the invention, the hydrogen peroxide source is usually added in an amount of from 0.1 to 1 % by weight based on the weight of the dry clay, in particular from 0.2 to 0.5 % by weight, and most preferably from 0.25 to 0.4 % by weight.

It is recommended to add the hydrogen peroxide at a point which is sufficiently remote from the die of the extruder so that the hydrogen peroxide added is completely decomposed before it passes through the die. It is indeed advantageous that the entire expansion takes place inside the extruder before the material leaves the extruder through the die. It is to be avoided that gas bubbles are formed after the material has left the extruder through the die. The hydrogen peroxide is preferably added in the mixer. The hydrogen peroxide is most often added diluted in the added water of point 2 above.

Surfactants can also be used in the process of the invention. Examples of suitable surfactants are synthetic or protein based. They are generally used in an amount of from 0.001 to 1 % by weight based on the weight of the dry clay.

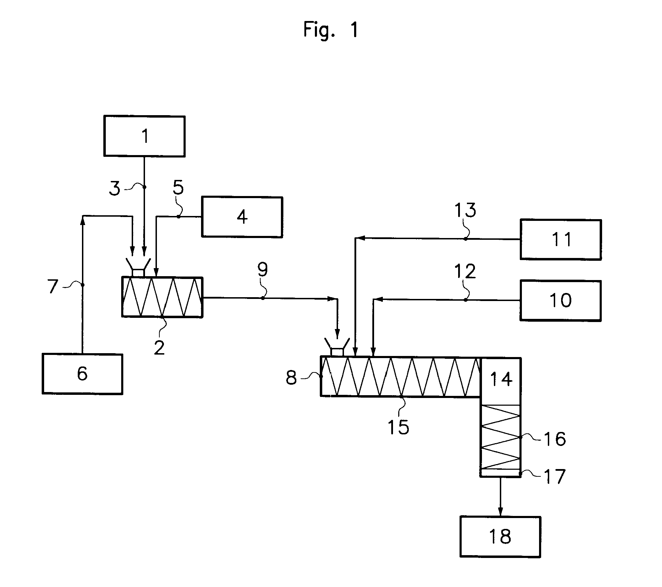

A particularly suitable process is schematized in figure 1. Clay located in the tank (1) is introduced in a mixer (2) through (3). Water located in the tank (4) is introduced into the mixer (2) through (5). A hydrogen peroxide source located in the tank (6) is introduced into the mixer (2) through (7). Clay, water and the hydrogen peroxide source are mixed in mixer (2) and the obtained mixture which is in the form of a pasty material is transferred from the mixer (2) into an extruder (8) through (9). Additional water located in the tank (10) or other additives located in the tank (11) can be introduced into the extruder through respectively (12) and (13). The extruder is equipped with a vacuum-de-airing chamber (14) and is composed of a mixing zone (15), an extrusion zone (16) and a die (17). The shaped material leaving the die (17) is transferred into a dryer (18).

The invention is hereafter illustrated by way of example only.

### Examples

Bricks have been manufactured starting from clay Cecina river valley (Italy) using the equipment shown in figure 1 and using an aqueous H₂O₂ solution containing 50 % wt of H₂O₂ as gas generating agent and the product LEVOCELL^{®} CP 83S as surfactant. The conditions used and the results obtained are summarized in tables 1 and 2. Table 1 shows the obtained extrusion power reduction at constant clay moisture, and table 2 shows the moisture reduction at constant extrusion power. The power requirement in extrusion was calculated using a current recorder and by multiplying current by voltage.

**Table 1**

| Operating conditions | | H₂O₂ addition (ppm H₂O₂ 100 % on dry clay basis) | | | | |
|---|---|---|---|---|---|---|
| | | 0 | | 300 | 500 | 800 |
| Test procedure | | (1) | The operating conditions were measured without H₂O₂ and surfactants. | | | |
| | | (2) | A given amount of H₂O₃₂ (and surfactants) was added and the extrusion power drops was measured. | | | |
| | | (3) | The same were repeated with different H₂O₂ amounts. | | | |
| Clay flow rate | t/h | 27 | | 27 | 27 | 27 |
| Clay moisture | % | 19 | | 19 | 19 | 19 |
| Surfactant added | ppm | 0 | | 170 | 170 | 170 |
| Measure electric current | Amp | 195 | | 180 | 165 | 150 |
| Extrusion power | kW | 128 | | 118 | 109 | 99 |
| Extrusion power reduction (%) | % | 0 | | 80 | 180 | 280 |
| | kW | 0 | | 81 | 157 | 265 |
| | kWh/t | 0 | | 0.37 | 0.73 | 1.10 |

**Table 2**

| Operating conditions | | H₂O₂ addition (ppm H₂O₂ 100 % on dry clay basis) | | | | |
|---|---|---|---|---|---|---|
| | | 0 | | 300 | 500 | 800 |
| Test procedure | | (1) | The operating conditions were measured without H₂O₂ and surfactants. | | | |
| | | (2) | A given amount of H₂O₂ (and surfactants) was added and the extrusion power drops was measured. | | | |
| | | (3) | The second water addition was reduced until the initial power was achieved. | | | |
| | | (4) | The same were repeated with different H₂O₂ amounts. | | | |
| Clay flow rate | t/h | 27 | | 27 | 27 | 27 |
| Extrusion power | kW | 128 | | 128 | 128 | 128 |
| Surfactant added | ppm | 0 | | 170 | 170 | 170 |
| Reduction of second water injection | Measured 1/h | 0 | | 80 | 180 | 280 |
| | Calculated from clay moisture content 1/h | 0 | | 81 | 157 | 265 |

## Claims

1. - Process for the manufacture of enlightened construction materials starting from clay by extrusion molding wherein a source of hydrogen peroxide is used as gas generating agent.

2. - Process according to claim 1 wherein the enlightened construction materials are chosen from bricks, wall tile, ceiling tile, core materials for insulated panels, curtain wall panels, panelized bricks, partition walls and exterior facings.

3. - Process according to claim 2 wherein the source of hydrogen peroxide is chosen from hydrogen peroxide itself, sodium percarbonate, sodium perborate, calcium peroxide, magnesium peroxide, zinc peroxide, mixed calcium / magnesium peroxide and their mixtures.

4. - Process according to anyone of claims 1 to 3 wherein the clay is first mixed with water in a mixer into a pasty material which is then introduced into an extruder.

5. - Process according to claim 4 wherein the amount of water added is from 1 to 30 % by weight based on the weight of the clay.

6. - Process according to anyone of claims 1 to 5 wherein the amount of hydrogen peroxide added is from 0.1 to 1 % by weight based on the weight of the clay.

7. - Process according to anyone of claims 1 to 6 wherein the hydrogen peroxide is added at a point which is sufficiently remote from the die of the extruder so that the hydrogen peroxide added is completely decomposed before it passes through the die.

8. - Process according to anyone of claims 1 to 7 wherein a surfactant is used.

9. - Use of a hydrogen peroxide source as gas generating agent in a process for the manufacture of enlightened construction materials starting from clay for the purpose of reducing the power of extrusion at constant moisture content.

10. - Use of a hydrogen peroxide source as gas generating agent in a process for the manufacture of enlightened construction materials starting from clay for the purpose of reducing the amount of added water at constant extrusion pressure.
